# FASCICULE DE BREVET EUROPEEN

(11) **EP 0 771 718 B1**
(45) Date de publication et mention de la délivrance du brevet: **22.03.2000**
(21) Numéro de dépôt: 96402321.2
(22) Date de dépôt: 31.10.1996
(51) Int. Cl.: B60J 5/06, B62D 33/027

(54) **Carrosserie comportant un soubassement, un pavillon et au moins une porte coulissante et deux portes battantes**
Fahrzeugaufbau, bestehend aus einem Unterbau, einem Oberbau und mindestens einer Schiebetür und zwei Flügeltüren
Vehicle body consisting of a substructure, a superstructure and at least one sliding door and two wing doors

(30) Priorité: 03.11.1995 FR 9512990
(43) Date de publication de la demande: 07.05.1997
(73) Titulaire: ASCA CARROSSIER CONSTRUCTEUR, F-78680 Epone (FR)
(72) Inventeur: Deschamp, Roger, 92500 Rueil Malmaison (FR); Patriarca, Yannick, 78410 Aubergenville (FR)
(74) Mandataire: Schrimpf, Robert

(56) Documents cités:
- EP-A- 0 159 206
- GB-A- 1 021 257
- US-A- 3 324 596
- US-A- 3 713 690

## Description

L'invention concerne les carrosseries comportant un soubassement, un pavillon et des portes pour l'ouverture et la fermeture de la carrosserie.

Le document EP-O 159 206 décrit une carrosserie pour véhicule routier comportant un soubassement, un pavillon, des montants coulissants portés par des galets roulant dans un rail fixé au pavillon et des battantes articulées sur les montants coulissants et portées par celles-ci. Tous ces éléments sont ainsi mobiles en position ouverte le long de la carrosserie en étant portés par les galets pour permettre d'ouvrir la carrosserie sur une grande portion de sa longueur.

Les montants sont reliées au profil de rive du soubassement par une pièce de liaison qui rappelle chaque montant contre le profil, les montants et les portes étant en permanence directement ou indirectement portées par les galets et donc par le rail, aussi bien en position ouverte qu'en position fermée des portes. Le rail est lui-même supporté par une poutre longitudinale latérale du pavillon. Afin que la carrosserie offre une ouverture de chargement large et continue, la carrosserie ne comporte pas de montant latéral intermédiaire supportant cette poutre longitudinale qui est donc portée seulement à ses extrémités avant et arrière. Cette poutre pouvant avoir plus de 13 m de longueur, le poids des montants et des portes provoque le fléchissement vers le bas de la poutre, et ce d'autant plus que cette poutre est prévue pour être relativement légère. Cette flèche négative peut entraîner un positionnement imprécis des portes en position fermée qui nuit à la qualité de l'obturation de la carrosserie et peut altérer le guidage des panneaux et des portes.

Le document US-3 713 690 divulgue une carosserie conforme au préambule de la revendication 1.

Un but de l'invention est de pallier cet inconvénient en proposant une carrosserie qui évite le fléchissement vers le bas de la poutre portant les portes.

En vue de la réalisation de ce but, on prévoit selon l'invention une carrosserie selon la revendication 1.

En position fermée, les portes sont supportées directement par le ou les appuis et non plus par le rail. La poutre associée au rail ne supporte donc les portes que lors des périodes durant lesquelles les portes sont ouvertes. Or, ces périodes sont très courtes par rapport aux périodes durant lesquelles les portes sont fermées. On évite donc le fléchissement vers le cas de la poutre associée au rail. De plus, les portes étant supportées par le ou les appuis en position fermée, elles sont positionnées précisément. Le levier permet de fermer chaque porte sans effort et est particulièrement avantageux pour chaque porte coulissante qu'il permet d'élever de la position ouverte à la position fermée.

D'autres caractéristiques et avantages de l'invention apparaîtront encore dans la description qui va suivre d'un mode préféré au réalisation donné à titre d'exemple non limitatif. Aux dessins annexés :
- la figure 1 est une vue en perspective d'une carrosserie selon l'invention,
- la figure 2 est une vue à plus grande échelle du détail D de la figure 1 et montre une porte battante en position ouverte.
- la figure 3 est une vue partielle en coupe de la carrosserie selon le plan III-III de la figure 2 et montre la porte battante juste avant fermeture,
- la figure 4 est une vue partielle en coupe de la carrosserie selon le plan IV-IV de la figure 1 et montre une portion médiane inférieure d'une porte coulissante en position fermée,
- la figure 5 est une vue partielle en coupe de la carrosserie selon le plan V-V de la figure 1 et montre une portion d'extrémité de cette porte coulissante en position fermée,
- la figure 6 est une vue analogue à la figure 5 et montre la porte coulissante dans la position intermédiaire,
- la figure 7 est une vue analogue à la figure 5 et montre la porte coulissante dans la position ouverte, et
- la figure 8 est une vue partielle en coupe du levier selon le plan VIII - VIII de la figure 2.

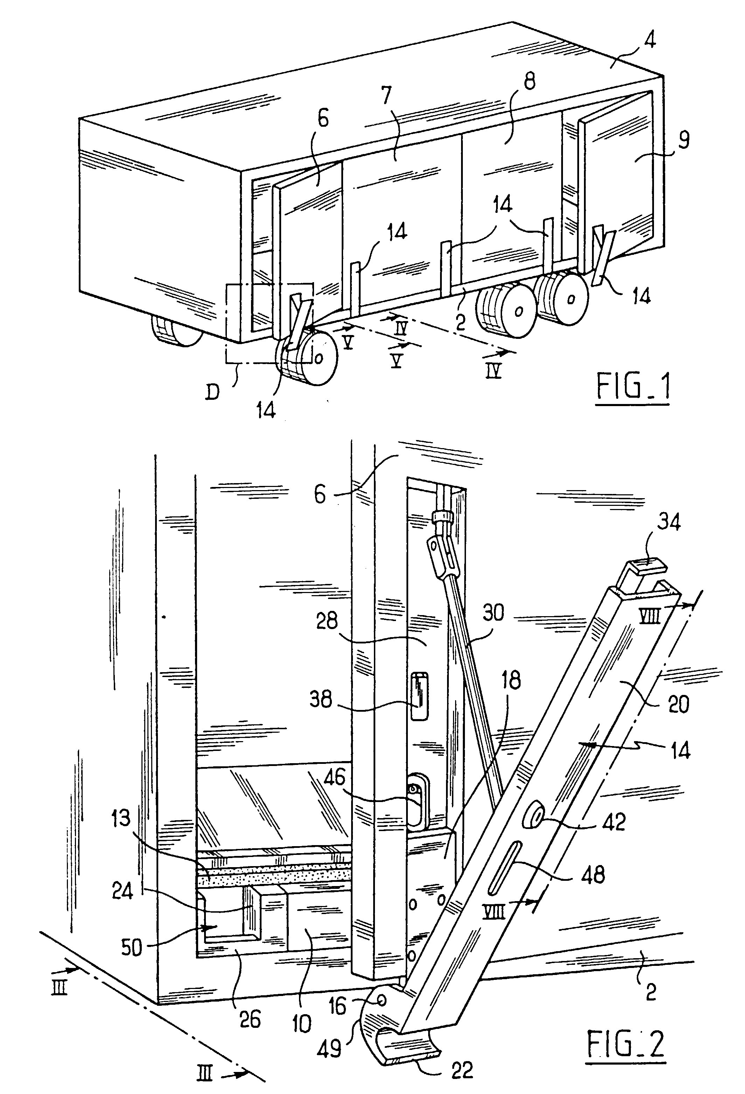

En référence à la figure 1, la carrosserie comporte un soubassement 2 et un pavillon 4, chacun de forme rectangulaire plane et parallèles entre eux, ainsi qu'une face avant et une face arrière reliant le pavillon au soubassement. Elle comporte aussi une porte coulissante 7 qui, de façon connue et non représentée, est portée position ouverte par des galets de roulement roulant dans un rail longitudinal fixé à une poutre latérale du pavillon qui est supportée seulement à ses deux extrémités. La porte 7 peut ainsi coulisser en position ouverte le long de la carrosserie. La carrosserie comporte encore deux portes battantes 6,8 articulées chacune à la porte coulissante 7 autour d'un axe vertical, les deux portes battantes 6,8 étant portées en position ouverte par la porte coulissante 7. Par conséquent, en position ouverte, les trois portes 6,7,8 sont mobiles d'un seul bloc le long de la carrosserie en étant supportées par le rail précité et ce directement pour la porte coulissante 7 et indirectement pour les deux portes battantes 6,8.

La carrosserie comporte également une troisième porte battante 9 articulée à un montant d'extrémité arrière de la carrosserie.

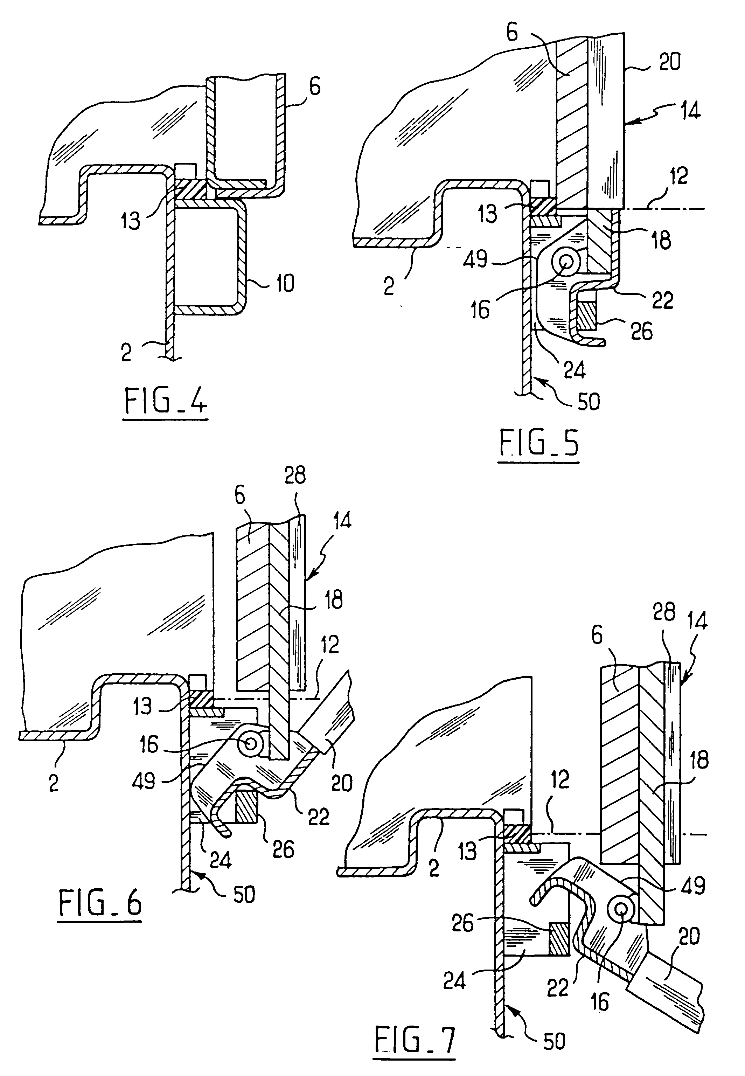

Selon l'invention et en reférence aux figures 2 et 4, la carrosserie comporte en outre trois appuis passifs 10 fixés au soubassement. Les trois appuis sont associés respectivement aux trois portes 6,7,8, chaque appui supportant la porte associée en position fermée de celle-ci. Chaque appui est constitué par un profilé en "U", les deux branches du "U" étant soudées au soubassement. Chaque profilé 10 est sensiblement aussi long que la porte associée et s'étend le long de la porte au dessous de la porte, en position fermée de celle-ci, le profilé étant en contact avec la porte sur toute la longueur d'une face inférieure de la porte en réalisant un contact surface contre surface avec celle-ci.

De plus, la position de l'appui 10 associé à la porte coulissante 7 est telle que la position fermée de cette porte est plus élevée que sa position ouverte, de sorte qu'en position fermée les galets ont décollé du rail et, la porte coulissante n'est plus portée par le rail et est uniquement supportée par le profilé 10. Il s'ensuit qu'en position fermée de la porte coulissante, les portes battantes 6,8 même lorsqu'elles sont ouvertes ne sont plus non plus indirectement portées par le rail mais sont supportées indirectement par l'appui de la porte coulissante.

La différence d'élévation de la porte coulissante est visible sur les figures 5 et 7 sur lesquelles une ligne de référence horizontale 12, fixe par rapport au soubassement a été représentée. En position fermée, chacune des portes est en butée latérale contre un joint d'étanchéité 13 dont le tronçon inférieur s'étend sur le profilé 10.

Dans le présent exemple, les portes battantes 6,8 sont reliées à la porte coulissante 7 par une articulation interdisant tout mouvement vertical de la porte battante par rapport à la porte coulissante. Les portes battantes 6,8 suivent donc les différences d'élévation de la porte coulissante. De plus, les trois profilés s'étendent dans le prolongement les uns des autres. Par conséquent, pour fermer les trois portes 6,7,8, on élève d'abord la porte coulissante 7 pour la placer sur son appui en position de fermeture, les portes battantes 6,8 subissant la même élévation. Les portes battantes 6,8 étant alors à la bonne élévation, il suffit de rabattre celles-ci en les plaçant sur leur profilé d'appui.

A cette fin, la carrosserie comporte des moyens de fermeture pour faire passer chaque porte de la position ouverte à la position fermée.

Ces moyens de fermeture comportent deux dispositifs à levier pour la porte coulissante 7 (à deux extrémités inférieures de celle-ci) et un dispositif à levier pour chaque porte battante 6,8, à une extrémité inférieure de la porte éloignée de l'articulation.

Tous ces dispositifs à levier sont identiques pour les trois portes 6,7,8 mais ils assurent des fonctions différentes : ils constituent des moyens de levage et de poussée de la porte coulissante 7 alors qu'ils constituent principalement des moyens de poussée des deux portes battantes 6,8.

En référence aux fig. 2, 3, 5, 6, 7, chaque dispositif à levier comporte un levier 14 articulé à la porte associée autour d'un axe 16 parallèle à la direction longitudinale de la carrosserie et s'étendant au-dessous d'un bord inférieur de la porte, près de celui-ci. L'axe 16 est constitué par une charnière reliant le levier à un pied 18 solidaire de la porte. La poignée 20 du levier, constituant la plus longue partie de celui-ci, s'étend en regard de la face externe de la porte, comme le montre la figure 2. Le levier 14 comporte en outre un crochet susceptible d'être engagé sur un élément 24 du soubassement. Cet élément comporte une bride allongée 26 s'étendant sensiblement dans le prolongement du profilé 10 parallèlement à celui-ci. Les éléments 24 et les profilés 10 sont distincts les uns des autres. Le levier 14 et la bride 26 coopèrent pour faire passer la porte associée de la position ouverte à la position fermée, le crochet venant pour cela en engagement avec la bride sur laquelle le levier prend appui pour réaliser un effet de levier. Pour la porte coulissante 7, cet effet de levier élève et pousse la porte de la position ouverte représentée à la figure 7 où la porte est supportée par le rail, à la position fermée représentée à la fig. 5 où la porte est supportée par l'appui 10 associé. Pour chaque porte battante 6,8, cet effet de levier pousse la porte de la position ouverte représentée à la fig. 2 où la porte battante est supportée par la porte coulissante jusqu'à la position fermée où la porte repose sur l'appui 10 associé, la figure 3 montrant la porte battante 6 juste avant la fermeture.

Pour chacune des portes, pour fermer la porte, on abaisse la poignée 20 du levier pour engager le crochet sur la bride (fig. 7) puis on relève cette poignée, ce qui entraîne la rotation du crochet sur la bride jusqu'à fermeture de la porte. L'ouverture de la porte à partir de la position fermée suit le déroulement inverse.

Pour chaque porte, le crochet et la bride sont disposés de sorte qu'ils verrouillent la porte au soubassement en position fermée de la porte, la bride s'étendant alors dans la trajectoire du crochet. Dans cette position, le levier est configuré pour s'étendre verticalement parallèlement à la porte en s'insérant dans un évidement 28 ménagé à cette fin dans la paroi de la porte. La carrosserie comporte en outre des moyens de blocage du levier en position fermée de la porte qui seront détaillés plus loin.

En outre, l'axe 16 est disposé par rapport au crochet 22 et à la bride 26 de telle sorte que la trajectoire de la porte coulissante 7 entre la position fermée et la position ouverte comprend une position intermédiaire, représentée à la fig. 6, plus élevée que la position fermée. Ainsi, pour faire passer la porte de la position fermée à la position ouverte (et réciproquement) il faut élever la porte jusqu'à la position intermédiaire au moyen du levier 14. L'existence de cette position intermédiaire permet d'éviter que la porte coulissante puisse passer de la position fermée à la position ouverte sous le simple effet de la gravité.

Le crochet 22 présente un dos 49 configuré de sorte que, lors de la manoeuvre du levier en vue de l'ouverture de la porte, le dos vient en appui contre une face 50 sensiblement verticale du soubassement située en arrière du crochet, le crochet s'étendant entre cette face et la bride 26. La mise en appui du dos 49 contre la face 50 est visible sur les figures 3 et 6. Cette mise en appui permet à l'utilisateur d'ouvrir la porte sans effort par effet de levier sur la face 50 cette fois, le crochet tournant autour de la bride 26. Cela est particulièrement avantageux lorsque les joints de porte ont collé accidentellement ou lorsque les jeux au niveau des portes sont très faibles et génèrent des frottements importants au niveau des joints.

Pour fermer les trois portes 6,7,8, on actionne d'abord les deux leviers de la porte coulissante 7 pour élever et pousser celle-ci jusqu'à la position fermée, ce qui a pour effet d'élever les deux portes battantes 6,8 dans le même mouvement. Puis on ferme chaque porte battante en la poussant en position fermée sur l'appui 10 au moyen du levier associé. L'ouverture des trois portes suit le déroulement inverse. En position fermée de chaque porte, c'est-à-dire la plupart du temps, la porte est donc en appui sur le profilé sans être portée par le rail. On évite ainsi l'apparition d'une flèche vers le bas sur la poutre supérieure latérale portant le rail. De plus, la position de chaque porte est précisément définie au moyen de l'appui associé. En position fermée, le crochet coopère avec la bride pour interdire tout déplacement vertical de la porte vers le haut ou vers le bas. De plus, ils maintiennent la porte en contact avec le soubassement en interdisant tout mouvement horizontal de la porte.

La porte coulissante 7 est verrouillée par son bord inférieur au soubassement au moyen des crochets et des brides et par son bord supérieur au pavillon par les galets et le rail. Pour chacune des portes battantes 6,8, le levier est en outre articulé à une bielle 30 reliée à une crémone verticale 32 intérieure à la porte et mobile verticalement en translation sous l'action du levier 14. A son extrémité supérieure cette crémone porte un pêne 35 qui s'efface dans la porte dès qu'on baisse le levier et qui dépasse du bord supérieur de la porte battante en position fermée pour entrer dans un profilé du pavillon afin de verrouiller la porte au pavillon. En position fermée, chaque porte battante 6,8 est ainsi verrouillée au soubassement et au pavillon, le verrouillage et le déverrouillage étant commandés simultanément par le levier.

La troisième porte battante 9 est également portée par un profilé 10 en position fermée et comporte aussi un dispositif à levier associé à une bride et à une crémone, permettant de pousser cette porte en position fermée et ce la verrouiller au soubassement et au pavillon.

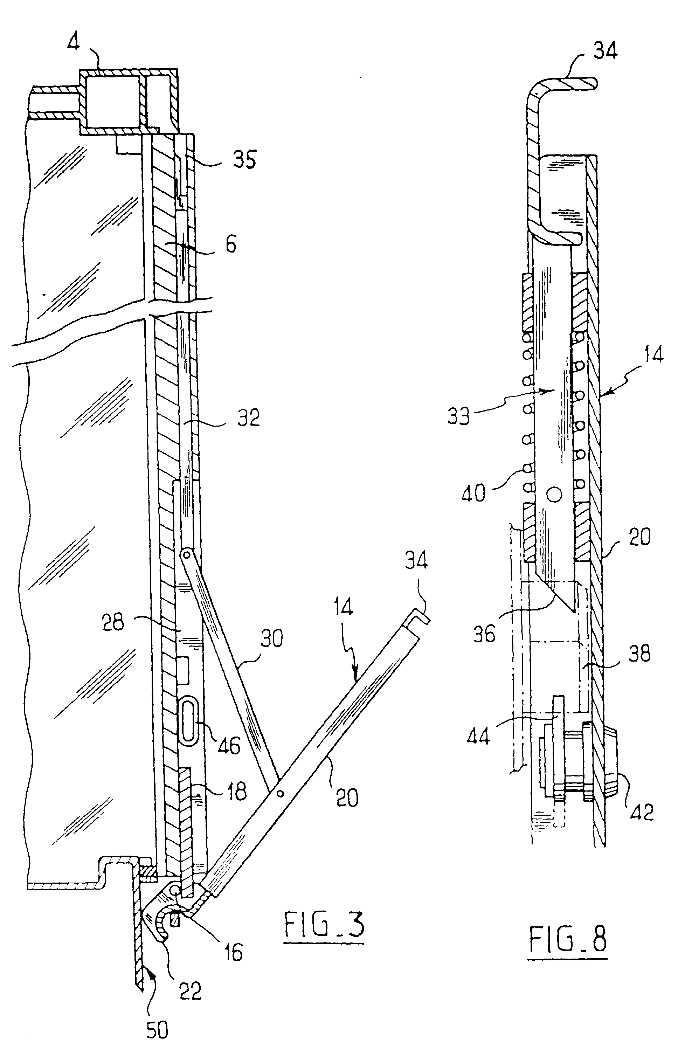

Pour chaque levier 14, les moyens de blocage du levier en position fermée de la porte comportent en référence à la figure 8 une broche 33 adjacente à la face du levier située en regard de la porte en position fermée. Cette broche est mobile en coulissement suivant la direction longitudinale du levier. Une première extrémité de la broche porte une palette de commande 34 dépassant du levier et une deuxième extrémité 36 de la broche opposée à la première peut être engagée en position fermée derrière une patte 38 solidaire de la porte et représentée en traits mixtes sur la figure 8, réalisant ainsi le verrouillage du levier.

Un ressort de rappel 40 prenant appui sur le levier et sur la broche rappelle la broche en engagement derrière la patte en position de verrouillage. La deuxième extrémité de la broche présente une surface inclinée telle que l'insertion progressive du levier dans la porte en position fermée entraîne le recul automatique de la broche 33 par un effet de rampe au contact de la patte, pour le passage de la patte, le ressort rappelant ensuite la broche derrière la patte une fois la position fermée atteinte. Pour l'ouverture de la porte, la palette de commande 34 permet le déverrouillage du levier par désengagement de la broche derrière la patte.

Chaque levier comporte en outre une serrure 42 à came batteuse 44 pouvant également venir en engagement derrière la patte 38, pour que le déverrouillage du levier soit possible seulement au moyen d'une clé correspondant à cette serrure.

En référence aux figures 2 et 3, la carrosserie comporte en outre pour chaque levier un anneau 46 fixé à la porte dans l'évidement 28 et articulé à la porte pour pouvoir traverser partiellement un jour 48 du levier en position fermée de la porte. Dans cette position, on peut ainsi faire passer un câble de scellage, entourant la carosserie, à travers chaque anneau 46 à l'extérieur du levier 14, ce qui interdit leur ouverture.

Bien entendu, on pourra apporter à l'invention de nombreuses modifications sans sortir du cadre de celle-ci.

On pourra varier le nombre, la disposition des portes et leurs liaisons mutuelles. La carrosserie pourra par exemple comporter deux portes coulissantes avec une ou deux portes battantes articulées sur chacune d'elle. L'articulation de chaque porte battante pourra être telle qu'elle permet un mouvement vertical de celle-ci par rapport à la porte coulissante, les moyens de fermeture assurant alors également pour ces portes une fonction de levage.

La carrosserie pourra comporter une porte battante articulée à un montant d'extrémité avant de la carrosserie et / ou une porte battante telle que la porte 9 articulée d'un montant d'extrémité arrière.

La carrosserie pourra comporter plusieurs appuis pour chaque porte réalisant chacun un contact ponctuel avec celle-ci. On pourra disposer les brides de sorte que toutes les portes soient supportées par un même profilé.

La carrosserie selon l'invention n'est pas limitée aux véhicules routiers et s'applique à d'autres types de véhicule.

## Revendications

1. Carrosserie comportant un soubassement (2), un pavillon (4), au moins une porte coulissante (7) portée en position ouverte par des galets roulant dans un rail fixé au pavillon et en outre au moins un appui (10) fixé au soubassement et supportant les portes en position fermée en s'étendant au-dessous des portes, la position fermée de la ou des portes coulissantes étant plus haute que sa ou leur position ouverte, la carrosserie comportant pour chaque porte au moins un levier (14) coopérant avec un élément (24) du soubassement pour placer la porte sur l'appui caractérisée en ce qu'elle comporte au moins deux portes battantes (6,8) articulées sur la ou chaque porte coulissante, la carosserie étant agencée de sorte que l'appui supporte directement le poids de la ou chaque porte en position fermée.

2. Carrosserie selon la revendication 1 caractérisée en ce que le ou chaque appui (10) comprend un profilé s'étendant le long de chaque porte en position fermée, au-dessous de celle-ci.

3. Carrosserie selon la revendication 1 ou 2, caractérisée en ce que le ou chaque levier est articulé à la porte associée et comporte un crochet (22) susceptible d'être engagé sur l'élément (24) du soubassement pour permettre de placer la porte sur l'appui, le crochet et l'élément étant disposés de sorte qu'ils verrouillent la porte au soubassement (2) en position fermée.

4. Carrosserie selon la revendication 3, caractérisée en ce que pour chaque levier, la carrosserie comporte en outre des moyens de blocage (33,38,42) du levier en position fermée de la porte associée.

5. Carrosserie selon l'une des revendications 3 à 4, caractérisée en ce que pour chaque levier, la carrosserie comporte en outre un anneau (46) fixé à la porte et pouvant traverser partiellement un jour (48) du levier en position fermée de la porte.

6. Carrosserie selon l'une des revendications 3 à 5, caractérisée en ce que pour la ou chaque porte coulissante, le ou chaque levier est articulé à la porte associée autour d'un axe (16) disposé par rapport au crochet (22) de telle sorte que la porte passe de la position fermée à la position ouverte via une position intermédiaire plus élevée que la position fermée.

7. Carrosserie selon l'une des revendications 3 à 6, caractérisée en ce que le crochet (22) présente un dos (49) configuré de sorte que lors de la manoeuvre du levier en vue de l'ouverture de la porte, le dos vient en appui contre une face (50) sensiblement verticale du soubassement située en arrière du crochet.

8. Carrosserie selon l'une des revendications 3 à 6 caractérisée en ce que pour chaque porte battante, le levier est articulé à une bielle (30) reliée à une crémone (32) mobile en translation verticale et assurant le verrouillage de la porte au pavillon.

## Patentansprüche

1. Aufbau, welcher folgendes umfaßt: einen Unterteil (2), einen Oberteil (4), wenigstens eine Schiebetür (7), welche über Rollkörper in eine offene Position gebracht wird, die in einer am Oberteil befestigten Schiene rollen und überdies wenigstens eine Auflage (10), die am Unterteil befestigt ist und die Türen in geschlossener Position trägt, indem sie sich unterhalb der Türen erstreckt, wobei die geschlossene Position der Schiebetür/en höher als ihre geöffnete Position ist und der Aufbau für jede Tür wenigstens einen Hebel (14) aufweist, der mit einem Element (24) des Unterteiles zusammenwirkt, um die Türe auf der Auflage zu plazieren, dadurch gekennzeichnet, daß sie wenigstens zwei Flügeltüren (6, 8) aufweist, die an der oder jeder Schiebetür gelenkig angebracht sind, wobei der Aufbau so eingerichtet ist, daß die Auflage das Gewicht der oder jeder Türe in geschlossener Position direkt trägt.

2. Aufbau nach Anspruch 1, dadurch gekennzeichnet, daß die oder jede Auflage (10) ein Profil aufweist, das sich längs jeder Türe in geschlossener Position erstreckt, und zwar unterhalb von dieser.

3. Aufbau nach Anspruch 1 oder 2, dadurch gekennzeichnet, daß der oder jeder Hebel an der zugehörigen Türe gelenkig angebracht ist und einen Haken (22) aufweist, der dazu geeignet ist, auf dem Element (24) des Unterteiles angesetzt zu werden, um ein Plazieren der Türe auf der Auflage zu erlauben, wobei der Haken und das Element so angeordnet sind, daß sie die Türe am Unterteil (2) in geschlossener Position verriegeln.

4. Aufbau nach Anspruch 3, dadurch gekennzeichnet, daß für jeden Hebel der Aufbau überdies Blockiermittel (33, 38, 42) des Hebels in geschlossener Position der zugehörigen Türe aufweist.

5. Aufbau nach einem der Ansprüche 3 bis 4, dadurch gekennzeichnet, daß für jeden Hebel der Aufbau überdies einen Ring (46) aufweist, der an der Türe befestigt ist und eine Öffnung (48) des Hebels in geschlossener Position der Türe teilweise durchsetzen kann.

6. Aufbau nach einem der Ansprüche 3 bis 5, dadurch gekennzeichnet, daß für die oder jede Schiebetüre der oder jeder Hebel an der dazugehörenden Türe um eine Achse (16) herum gelenkig angebracht ist, die in Bezug auf den Haken (22) derart angeordnet ist, daß die Türe von der geschlossenen Position in die geöffnete Position über eine Zwischenposition übergeht, die höher als die geschlossene Position ist.

7. Aufbau nach einem der Ansprüche 3 bis 6, dadurch gekennzeichnet, daß der Haken (22) einen Rückenteil (49) aufweist, der so ausgebildet ist, daß der Rükkenteil, während des Türöffnungs-Manövers des Hebels, gegen eine im wesentlichen vertikale Fläche (50) des Unterteiles in Anschlag kommt, die sich hinter dem Haken befindet.

8. Aufbau nach einem der Ansprüche 3 bis 6, dadurch gekennzeichnet, daß für jede Flügeltüre der Hebel gelenkig an einem Arm (30) angebracht ist, der mit einem Stangenriegel (32) verbunden ist, der vertikal verschiebbar ist und die Verriegelung der Türe am Oberteil sicherstellt.

## Claims

1. Bodywork comprising a substructure (2), a roof (4), at least one sliding door (7) carried in the open position by wheels running in a rail fixed to the roof, and also at least one rest (10) fixed to the substructure and supporting the door(s) in the closed position by extending beneath the door(s), the closed position of the or each sliding door being higher than the open position thereof, the bodywork including, for each door, at least one lever (14) co-operating with an element (24) of the substructure to place the door on the rest, and being characterized in that it includes at least two swing doors (6, 8) hinged on the or each sliding door, the bodywork being arranged so that the rest directly supports the weight of the or each door in the closed position.

2. Bodywork according to claim 1, characterized in that the or each rest (10) comprises a section member extending along each door in the closed position, beneath the door.

3. Bodywork according to claim 1 or 2, characterized in that the or each lever is hinged to the associated door and includes a hook (22) suitable for being engaged on the substructure element (24) to enable the door to be placed on the rest, the hook and the element being disposed in such a manner that they lock the door to the rest (2) in the closed position.

4. Bodywork according to claim 3, characterized in that for each lever the bodywork further includes means (33, 38, 42) for locking the lever in the closed position of the associated door.

5. Bodywork according to claim 3 or 4, characterized in that for each lever the bodywork further includes a ring (46) fixed to the door and capable of passing in part through a slot (48) of the lever when the door is in the closed position.

6. Bodywork according to any one of claims 3 to 5, characterized in that for the or each sliding door, the or each lever is hinged to the associated door about an axis (16) disposed relative to the hook (22) in such a manner that the door goes from the closed position to the open position via an intermediate position that is higher than the closed position.

7. Bodywork according to any one of claims 3 to 6, characterized in that the hook (22) has a back (49) shaped so that while the lever is being driven to open the door, the back bears against a substantially vertical face (50) of the substructure situated behind the hook.

8. Bodywork according to any one of claims 3 to 6, characterized in that for each swing door, the lever is hinged to a connecting rod (30) connected to an espagnolette bolt (32) that is movable in vertical translation for the purpose of locking the door to the roof.
